# EUROPEAN PATENT APPLICATION

(11) **EP 4 373 183 A1**
(43) Date of publication of application: **22.05.2024**
(21) Application number: 21950196.2
(22) Date of filing: 15.07.2021
(51) Int. Cl.: H04W 72/04, H04W 72/56

(54) **TERMINAL AND WIRELESS COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2021/026708
(87) International publication number: WO 2023/286259

(57) **Abstract**

This terminal (20) comprises: a control unit (203) that determines the granularity of an object for which the control of switching carriers for transmitting an uplink control channel is to be supported; and a transmission unit (202) that transmits the uplink control channel under the control of switching the carriers for the object in accordance with the determined granularity.

## Description

### Technical Field

The present disclosure relates to a terminal and a radio communication method.

### Background Art

In the 3rd Generation Partnership Project (3GPP), in order to realize a further increase in system capacity, a further increase in data transmission rate, a further decrease in latency in a radio section, and/or the like, a radio communication system called 5G or New Radio (NR) (hereinafter this radio communication system is referred to as "NR") has been discussed. In 5G, various radio technologies and network architectures have been discussed in order to satisfy the requirement that the latency in the radio section be 1 ms or less while achieving the throughputs equal to or greater than 10 Gbps (see, e.g., Non-Patent Literature (hereinafter, referred to as "NPL") 1).

Further, in the 3GPP standardization, Physical Uplink Control Channel (PUCCH) carrier switching has been discussed with respect to the extension of an Ultra-Reliable and Low Latency Communications (URLLC) technology. The PUCCH carrier switching has been studied as a method of reducing latency in Hybrid Automatic Repeat reQuest-ACKnowledgement (HARQ-ACK) feedback in a Time Division Duplex (TDD) scheme (see, e.g., NPL 2).

### Citation List

### Non-Patent Literature

NPL 1
   3GPP TS38.300 V16.4.0 (2020-12)
NPL 2
   3GPP TSG RAN Meeting #88e, RP-201310, Electronic meeting, June 29-July 3,2020

### Summary of Invention

There is scope for further study on clarifying an object for which switching control of a carrier on which an uplink control channel is transmitted is to be supported.

An aspect of the present disclosure is to provide a terminal and a radio communication method each capable of clarifying an object for which switching control of a carrier on which an uplink control channel is transmitted is to be supported.

A terminal according to an aspect of the present disclosure includes: a control section that determines granularity of an object for which switching control of a carrier on which an uplink control channel is transmitted is to be supported; and a transmission section that performs, on the object in accordance with the determined granularity, transmission of the uplink control channel under the switching control of the carrier.

A radio communication method according to an aspect of the present disclosure includes: determining, by a terminal, granularity of an object for which switching control of a carrier on which an uplink control channel is transmitted is to be supported; and performing, by the terminal, on the object in accordance with the determined granularity, transmission of the uplink control channel under the switching control of the carrier.

According to an aspect of the present disclosure, it is possible to clarify an object for which switching control of a carrier on which an uplink control channel is transmitted is to be supported.

### Brief Description of Drawings

FIG. 1 is a diagram provided for describing an exemplary radio communication system according to an embodiment;
FIG. 2 is a diagram provided for describing an example of dual connectivity;
FIG. 3 is a diagram provided for describing an example of PUCCH carrier switching;
FIG. 4 is a block diagram illustrating an exemplary configuration of a base station according to the embodiment;
FIG. 5 is a block diagram illustrating an exemplary configuration of a terminal according to the embodiment; and
FIG. 6 illustrates an exemplary hardware configuration of the base station and the terminal according to the embodiment.

### Description of Embodiments

### (System Configuration)

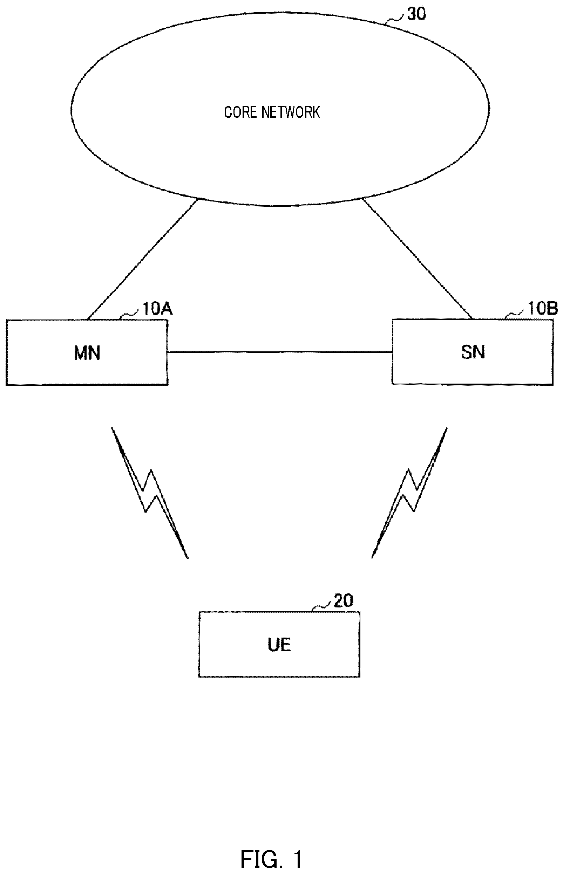

FIG. 1 is a diagram provided for describing an exemplary radio communication system according to an embodiment. The radio communication system in the embodiment of the present invention includes base station 10 and terminal 20, as illustrated in FIG. 1. FIG. 1 illustrates base station 10 and terminal 20, one each, but it is merely exemplary, and either one or both of base station 10 and terminal 20 may be plural in number.

Base station 10 is a communication apparatus that provides one or more cells and performs radio communication with terminal 20. A physical resource for a radio signal is defined in time domain and frequency domain, in which the time domain may be defined by the number of OFDM symbols and the frequency domain may be defined by the number of subcarriers or the number of resource blocks. Further, a Transmission Time Interval (TTI) in time domain may be a slot or may be a subframe.

Base station 10 can perform carrier aggregation, in which communication with terminal 20 is performed by bundling together a plurality of cells (e.g., a plurality of component carriers (CCs)). In the carrier aggregation, one PCell (primary cell) and one or a plurality of SCells (secondary cells) are used.

Base station 10 transmits a synchronization signal, system information, and the like to terminal 20. The synchronization signal is, for example, a Primary Synchronization Signal (PSS) and a Secondary Synchronization Signal (SSS).

The system information is transmitted through, for example, a Physical Broadcast Channel (PBCH) or a Physical Downlink Shared Channel (PDSCH) and is also referred to as broadcast information. As illustrated in FIG. 1, base station 10 transmits a control signal or data to terminal 20 in Downlink (DL) and receives a control signal or data from terminal 20 in Uplink (UL).

Here, a signal transmitted through a control channel, such as a Physical Uplink Control Channel (PUCCH) and a Pysical Downlink Control Channel (PDCCH), is referred to as a control signal, and a signal transmitted through a shared channel, such as a Pysical Uplkink Shared Channel (PUSCH) and PDSCH, is referred to as data. However, such designations are merely exemplary, and other designations may be used.

Terminal 20 is, for example, a communication apparatus provided with a radio communication function, such as a smart phone, a mobile phone, a tablet, a wearable terminal, or a Machine-to-Machine (M2M) communication module. As illustrated in FIG. 1, terminal 20 receives a control signal or data from base station 10 in DL and transmits a control signal or data to base station 10 in UL so as to utilize various communication services provided by the radio communication system. Incidentally, terminal 20 may be referred to as User Equipment (UE), and base station 10 for New Radio (NR) may be referred to as a gNB.

Terminal 20 can perform carrier aggregation (CA), in which communication with base station 10 is performed by bundling together a plurality of cells (a plurality of component carriers (CCs)). In the CA, one PCell (primary cell) and one or more SCells (secondary cells) are used. A PUCCH-SCell having PUCCH may also be used.

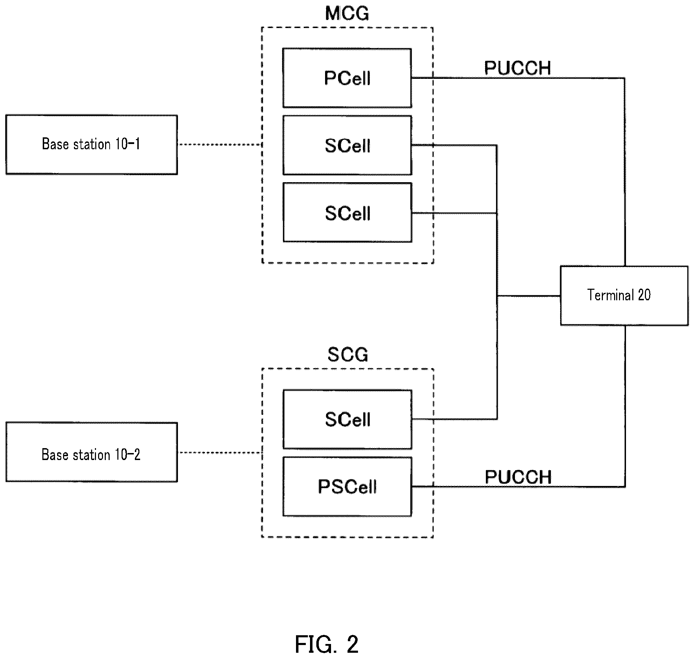

FIG. 2 illustrates an exemplary configuration of a radio communication system when Dual connectivity (DC) is executed. As illustrated in FIG. 2, base station 10-1 serving as a Master Node (MN) and base station 10-2 serving as a Secondary Node (SN) are icnluded. Base stations 10-1 and 10-2 are connected to a core network, for example. Terminal 20 can communicate with both base station 10-1 and base station 10-2.

A cell group provided by base station 10-1 serving as the MN may be referred to as a Master Cell Group (MCG), and a cell group provided by base station 10-2 serving as the SN may be referred to as a Secondary Cell Group (SCG). Further, in the DC, the MCG is composed of, for example, one PCell and one or a plurality of SCells. The SCG is composed of, for example, one PSCell (Primary SCell) and one or a plurality of SCells. As illustrated in the example of FIG. 2, in the DC, carriers between different base stations are bundled together.

In the example of FIG. 2, base station 10-1 communicates with terminal 20 via a primary cell (PCell) and a secondary cell (SCell). In the example of FIG. 2, terminal 20 establishes a Radio Resource Control (RRC) connection with base station 10-1.

In the DC, the latency in communication between base station 10-1 and base station 10-2 is large; hence, it may be difficult to indicate uplink control information (e.g., UCI), which has been received through the PCell of base station 10-1, to base station 10-2 in real time via a backhaul link and to reflect the information in scheduling of an SCell under base station 10-2.

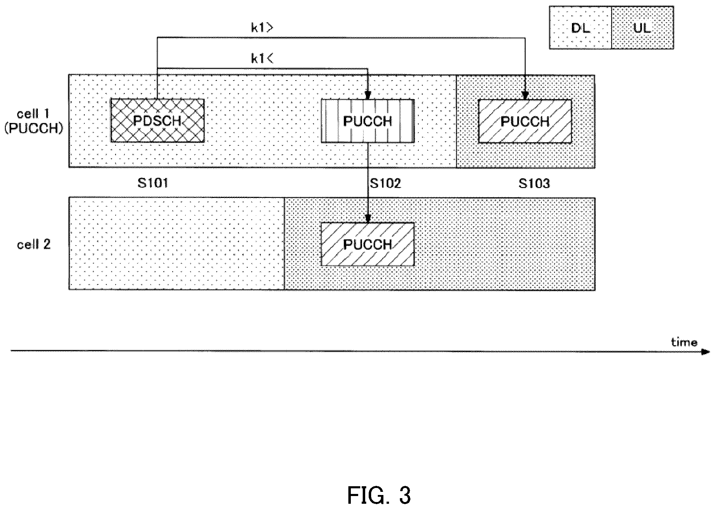

Therefore, in the DC, for example, in addition to the PCell of base station 10-1, one carrier under base station 10-2 is set to be a Primary SCell (PSCell), and then, PUCCH transmission is supported in the PSCell. Accordingly, as illustrated in the example of FIG. 3, terminal 20 transmits the UCI to base station 10-2 via PSCell.

In the example of FIG. 2, in addition to the PCell, an SCell is configured for base station 10-1. Moreover, in addition to the PSCell, an SCell is configured for base station 10-2. Terminal 20 transmits, through PUCCH in the PCell, the UCI of each carrier under base station 10-1. Terminal 20 also transmits, through PUCCH in the PSCell, the UCI of each carrier under base station 10-2.

While the DC is performed, terminal 20 transmits PUCCH via a PCell, a PSCell and/or a PUCCH-SCell. It need not be assumed that terminal 20 transmits PUCCH via an SCell that is other than the PCell, the PSCell, and the PUCCH-SCell.

"PUCCH carrier switching" has been studied with respect to the extension of the URLLC technology in Release 17 of 3GPP. The term "switching" may be replaced with one another as "changing" or "selecting."

The "PUCCH carrier switching" has been studied as a method of reducing latency in Hybrid Automatic Repeat reQuest-ACKnowledgement (HARQ-ACK) feedback in a Time Division Duplex (TDD) scheme.

FIG. 3 illustrates an example of the "PUCCH carrier switching." In the example of FIG. 3, base station 10 and terminal 20 communicate with each other via cell #1 (cell 1) and cell #2 (cell 2). In the example of FIG. 3, cell #1 is a PCell and cell #2 is an SCell.

In the example of FIG. 3, terminal 20 receives data (e.g., receives PDSCH) at the timing of S101. Terminal 20 attempts to transmit, at the timing of S102, a confirmation response signal (e.g., HARQ-ACK) for the data received in S 101.

Here, at the timing of S102, a slot for cell #1 is configured for DL. Therefore, when terminal 20 transmits HARQ-ACK in cell #1, transmission of HARQ-ACK is suspended until a PUCCH transmission occasion in a slot for UL (e.g., timing of S103 in FIG. 3) arrives. This may increase latency in the HARQ-ACK transmission.

On the other hand, in the exampleof FIG. 3, a slot for cell #2 is configured for UL at the timing of S102. The latency in the HARQ-ACK transmission can be reduced when terminal 20 can transmit, in this UL slot, HARQ-ACK for the data received in S101. In URLLC, since low latency in a radio section is required, as the extension of the URLLC technology, the "PUCCH carrier switching" in which terminal 20 switches a carrier on which PUCCH transmission is performed has been studied.

Note that, in the following description, "the same timing" may be completely the same timing or may represent that all or some of time resources (e.g., one or a plurality of symbols (which may also be resource(s) in time units shorter than symbols)) are the same or overlap.

The "PUCCH carrier switching" may represent that in a case where terminal 20 attempts to perform PUCCH transmission at a particular transmission timing of a Pcell (which may be PScell or PUCCH-Scell), terminal 20 switches a cell on which the PUCCH transmission is performed from the Pcell (which may be PScell or PUCCH-Scell) to an Scell (which is Scell other than PScell in the case of PScell and is Scell other than PUCCH-Scell in the case of PUCCH-Scell) of one or a plurality of Scells, in which a slot at the same timing as the particular transmission timing is a UL slot, since the slot at the particular transmission timing of the Pcell (which may be PScell or PUCCH-Scell) is a DL slot.

The unit of the particular transmission timing is not limited to the slot. For example, the particular transmission timing may be a timing based on a time interval that is longer than a "slot" (e.g., subframe) or may be a timing based on a time interval that is shorter than a "slot" (e.g., subslot or symbol). The subslot may be composed of, for example, two symbols or seven symbols.

Two methods have been studied for the "PUCCH carrier switching." The first method is a method in which base station 10 dynamically indicates, to terminal 20, a carrier for PUCCH transmission. The term "indicate" may be replaced with "notificate."

The second method is a method in which base station 10 semi-statically configures, for terminal 20, a carrier for performing PUCCH transmission. Note that, in an embodiment described below, the "PUCCH transmission" may refer to transmission of uplink control information (e.g., UCI) via PUCCH.

There is scope for further study on how to enable and disable dynamic or semi-static PUCCH carrier switching.

In one example, with respect to support for the PUCCH carrier switching, there is scope for further study on granularity (or support level) as exemplified below.
- Whether the PUCCH carrier switching is based on only one or both of the two-level priorities (high priority (HP) and low priority (LP)) of the UCI or PUCCH.
- Which UCI type (e.g., HARQ-ACK, Scheduling Request (SR), or Channel State Information (CSI) feedback, or the like) the PUCCH carrier switching is based on.
- Whether the PUCCH carrier switching is defined by standards or follows the enabling or disabling indication.
- Whether the enabling or disabling of the dynamic PUCCH carrier switching and the semi-static PUCCH carrier switching are performed together (jointly) or individually (separately).
- Whether the dynamic PUCCH carrier switching and the semi-static PUCCH carrier switching have a difference in enabled PUCCH SCells.

### <Proposal 1>

Hereinafter, a description will be given of granularity for which the PUCCH carrier switching is to be supported.

### (Option 1) Overall Definition

PUCCH carrier switching for information on any PUCCH (e.g., PUCCH with any priority or/and any UCI type) may be supported. For example, the PUCCH carrier switching may be supported uniformly (or collectively) without depending on difference in UCI type, in PUCCH priority, or in UCI type and PUCCH priority.

(Option 2) One-level PUCCH carrier switching based on information on PUCCH (priority of UCI or PUCCH, or UCI type) may be supported. For example, PUCCH carrier switching for PUCCH with information on a particular PUCCH may be supported. PUCCH carrier switching for PUCCH with a particular priority (one or more priorities) or for PUCCH through which a particular type (one or more types) of UCI is transmitted may be supported.

The "information on a particular PUCCH," "particular PUCCH priority," or "particular UCI type" may be defined by standards or may be determined in terminal 20 based on the indication from base station 10 regarding the enabling or disabling of the PUCCH carrier switching.

(Option 3) Two-level PUCCH carrier switching based on a combination of a plurality of pieces of information on PUCCH (e.g., priority of UCI or PUCCH, and UCI type) may be supported. For example, PUCCH carrier switching may be supported for PUCCH with a particular UCI type having a particular PUCCH priority(ies).

The "particular PUCCH priority" or "particular UCI type" may be defined by standards or may be determined in terminal 20 based on the indication from base station 10 regarding the enabling or disabling of the PUCCH carrier switching.

Note that, for example, different options may be used for different PUCCH carrier switching methods.

### Example 1: Option 1 for dynamic PUCCH carrier switching

For example, the dynamic PUCCH carrier switching may be supported for any priority or any UCI type or both.

### Example 2: Option 3 for semi-static PUCCH carrier switching

For example, the semi-static PUCCH carrier switching may be supported for two-level priority (e.g., HARQ-ACK for high-priority (HP) Semi-Persistent Scheduling (SPS)).

### <Proposal 2>

Next, a description will be given of the enabling and disabling of the dynamic and/or semi-static PUCCH carrier switching.

### (Enabling and Disabling Methods)

### Alt. 1: Implicit indication

Whether to enable or disable the dynamic and/or semi-static PUCCH carrier switching may be determined by, for example, whether configuration information on PUCCH (e.g., PUCCH-Config that is one example of higherr layer parameter) has been configured for an Scell that is other than a Pcell, a PScell, and a PUCCH-Scell.

### Alt. 2: Explicit Signaling

Whether to enable or disable the dynamic and/or semi-static PUCCH carrier switching may be determined by, for example, RRC parameter configuration (e.g., RRC parameter, PucchCarrierSwitchingEnabled-r17) and/or a dynamic indication (e.g., DCI or MAC CE). Note that the MAC CE is an abbreviation for a "medium access control (MAC)-control element."

### <Detailed Example of Proposal 2>

### (Enabling and Disabling by Explicit Signaling)

The enabling and disabling of the dynamic PUCCH carrier switching and the semi-static PUCCH carrier switching may be performed individually or collectively (jointly).

(Option 1) The enabling and disabling of the dynamic PUCCH carrier switching and the semi-static PUCCH carrier switching may be performed by individual signaling.

The respective signalling methods for the dynamic PUCCH carrier switching the semi-static PUCCH carrier switching may be the same or different to/from each other.

An individual RRC parameter or a dynamic indication (e.g., DCI or MAC CE) may be used to enable or disable the dynamic PUCCH carrier switching and the semi-static PUCCH carrier switching.

Note that, in a situation where both the dynamic PUCCH carrier switching and the semi-static PUCCH carrier switching are enabled in accordance with the respective signalling while the simultaneous enabling of the dynamic PUCCH carrier switching and the semi-static PUCCH carrier switching is not supported, any of the following options may be applied.
Opt. 1: Handle as an error case;
Opt 2: Enable later-enabled PUCCH carrier switching method and disable the other methods;
Opt. 3: Enable the dynamic carrier switching and disable the semi-static carrier switching; and
Opt. 4: Enable the semi-static carrier switching and disable the dynamic carrier switching.

### Examples 1 and 2 are will be described below.

Example 1: The dynamic PUCCH carrier switching may be enabled or disabled by a higher layer parameter (e.g., RRC parameter, DynamicPucchCarrierSwitchingEnabled-r17). The semistatic PUCCH carrier switching may be enabled or disabled by, for example, a higher layer parameter (e.g., RRC parameter, SemiStaticPucchCarrierSwitchingEnabled-r17).

Example 2: The enabling or disabling of the dynamic PUCCH carrier switching is configured by the higher layer parameter (e.g., RRC parameter DynamicPucchCarrierSwitchingEnabled-r17). The enabling or disabling of the semistatic PUCCH carrier switching is configured by, for example, the dynamic indication (e.g., DCI or MAC CE).

(Option 2) The enabling or disabling of the dynamic PUCCH carrier switching and/or the semi-static PUCCH carrier switching may be collectively (jointly) performed. By way of example, the dynamic PUCCH carrier switching and the semi-static PUCCH carrier switching may be enabled or disabled collectively (or simultaneously) by the configuration with the higher layer parameter (e.g., RRC parameter) or by the dynamic indication.

Based on Option 1 or Option 2 that has been mentioned above, signaling specific to a cell or specific to a cell group (e.g., CCs associated with the same SpCell and/or PUCCH-Scell are regarded as one cell group) may be used.

### (For Cell Group-Specific Signaling)

For example, the higher layer parameter (e.g., RRC parameter (if any)) and/or the dynamic indication (if any) may be commonly applied to any possible PUCCH cell in a cell group. For example, the enabling or disabling of the dynamic PUCCH carrier switching and/or the semistatic PUCCH carrier switching may be applied by the higher layer parameter (e.g., RRC parameter (if any)) and/or the dynamic indication (if any). When the PUCCH carrier switching is enabled, PUCCH is allowed to be switched to any possible PUCCH cell in the cell group.

### (For Cell-Specific Signaling)

A target for the cell-specific signaling is to indicate an enabled PUCCH Scell(s) for PUCCH with the PUCCH carrier switching. The cell(s) to be enabled may be the same or different between the dynamic PUCCH carrier switching and the semistatic PUCCH carrier switching.

The higher layer parameter (e.g., RRC parameter (if any)) may be individually set for each PUCCH Scell or for a set of PUCCH Scells. For example, an RRC parameter, DynamicPucchCarrierSwitchingEnabled-r17, corresponding to cell #1 may be used to enable PUCCH that has been switched to cell #1 by the dynamic switching. The dynamic indication (if any) may indicate that PUCCH is allowed to be switched to a particular PUCCH Scell(s), for example.

### (Enabling or Disabling by Explicit Signaling)

A design of signaling for the enabling or disabling can be combined with the study on granularity described in any of Options 1 to 3 of Proposal 1. Examples 1 and 2 will be described below.

Example 1: Priority-level granularity may be further taken into account based on individual signaling for the enabling or disabling of the dynamic PUCCH carrier switching and the semistatic PUCCH carrier switching.

For example, a higher parameter corresponding to cell #1 (e.g., RRC parameter, HpDymanicationPucchCarrierSwitchingEnabled-r17) may be used to enable the dynamic PUCCH carrier switching for HP PUCCH for cell #1. Additionally, a higher layer parameter corresponding to cell #2 (e.g., RRC parameter, LpSemiStaticPucchCarrierSwitchingEnabled-r17) may be used to enable the semistatic PUCCH carrier switching for LP PUCCH for cell #2.

Example 2: Priority- and UCI type-level granularity may be further taken into account based on the collective (joint) enabling or disabling of the dynamic PUCCH carrier switching and the semi-static PUCCH carrier switching.

For example, a higher layer parameter (e.g., RRC parameter, LpHarqDinamicPucchCarrierSwitchingEnabled-r17) may be used to enable or disable the dynamic PUCCH carrier switching for LP HARQ-ACK. Further, a higher layer parameter (e.g., RRC parameter, HpSRSemiStaticPucchCarrierSwitchingEnabled-r17) may be used to enable or disable the semistatic PUCCH carrier switching for an HP scheduling request (SR).

### <Variation>

Which proposal and option to use among above-mentioned Proposal 1 (including various options) and Proposal 2 (including various options) may be, for example, configured for terminal 20 by a higher layer parameter, may be determined by terminal 20 reporting terminal capability information (UE capability(ies)) to base station 10, may be described in standards, or may be determined based on the configuration with the higher layer parameter and the reported terminal capability information.

### <UE Capability>

As an exemple of the terminal capability information on the PUCCH carrier switching, any one or a plurality of the following may be defined:
(1) Whether terminal 20 supports the PUCCH carrier switching;
(2) Whether terminal 20 supports the dynamic PUCCH carrier switching;
(3) Whether terminal 20 supports the semi-static PUCCH carrier switching;
(4) Whether terminal 20 supports the PUCCH carrier switching for all UCI types or for a particular UCI type;
(5) Whether terminal 20 supports the PUCCH carrier switching for both of the two-level priorities or for one particular priority;
(6) Whether terminal 20 supports the collective enabling or disabling of the dynamic PUCCH carrier switching and the semistatic PUCCH carrier switching;
(7) Whether terminal 20 supports the individual enabling or disabling of the dynamic PUCCH carrier switching and the semistatic PUCCH carrier switching; and
(8) Whether terminal 20 supports enabled different PUCCH Scells, in regard to the dynamic PUCCH carrier switching and the semistatic PUCCH carrier switching.

After transmitting any one or a plurality the terminal capacity information (1) to (8) to base station 10, for example, terminal 20 may perform an operation in accordance with the transmitted terminal capacity information. By way of example, terminal 20 may perform the PUCCH carrier switching in accordance with Option 1 of Proposal 1, by transmitting the terminal capability information (1). Moreover, for example, terminal 20 may perform the PUCCH carrier switching in accordance with Option 3 of Proposal 1, by transmitting the terminal capability information (4) and (5), for example. Furthermore, for example, terminal 20 may perform the PUCCH carrier switching in accordance with any of the methods exemplified in Proposal 2, by transmitting any one or a plurality of the terminal capability information (2), (3), (6), (7), and (8).

Note that the radio communication system illustrated in FIG. 1 may be a radio communication system conforming to (or according to) a scheme called 5G, Beyond 5G, 5G Evolution, or 6G. The radio communication system may also be a later generation system than 6G.

Base station 10 may be referred to as an NG-RAN Node, an ng-eNB, an eNodeB (eNB), or a gNodeB (gNB). Terminal 20 may be referred to as User Equipment (UE). Further, base station 10 may be regarded as an apparatus included in a network to which terminal 20 is connected.

Base station 10 performs radio communication with terminal 20. For example, the radio communication to be performed conforms to the NR. By controlling radio signals transmitted from a plurality of antenna elements, at least one of base station 10 and terminal 20 may support Massive Multiple-Input Multiple-Output (MIMO) that generates a beam (BM) having higher directivity. Further, at least one of base station 10 and terminal 20 may support carrier aggregation (CA) that aggregates and uses a plurality of component carriers (CC). Further, at least one of base station 10 and terminal 20 may support, e.g., dual connectivity (DC) in which communication is performed between terminal 20 and each of a plurality of base stations 10.

The radio communication system may support a plurality of frequency bands. For example, the radio communication system supports Frequency Range (FR) 1 and FR 2. For example, the frequency bands of the respective FRs are as follows:
- FR 1: 410 MHz to 7.125 GHz; and
- FR 2: 24.25 GHz to 52.6 GHz.

In FR 1, a Sub-Carrier Spacing (SCS) of 15 kHz, 30 kHz or 60kHz may be used, and a bandwidth (BW) of 5 MHz to 100 MHz may be used. FR 2 is, for example, a higher frequency than FR 1. In FR 2, an SCS of 60 kHz or 120 kHz may be used and a bandwidth (BW) of 50 MHz to 400 MHz may be used. FR 2 may also include an SCS of 240 kHz.

The radio communication system in the present embodiment may support a higher frequency band than the frequency band of FR 2. For example, radio communication system 10 in the present embodiment may support a frequency band exceeding 52.6 GHz and up to 114.25 GHz. Such a high frequency band may be referred to as "FR 2x."

Further, Cyclic Prefix-Orthogonal Frequency Division Multiplexing (CP-OFDM) / Discrete Fourier Transform-Spread-Orthogonal Frequency Division Multiplexing (DFT-S-OFDM) having a sub-carrier spacing (SCS) larger than that in the examples described above may be applied. Further, the DFT-S-OFDM may be applied to either one or both of uplink and downlink.

In the radio communication system, a slot configuration pattern of TDD may be configured. For example, DDDSU (D: downlink (DL) symbol, S: DL/uplink (UL) or guard symbol, and U: UL symbol) may be specified (see 3GPP TS38.101-4).

Further, in radio communication system 10, it is possible to perform PUSCH (or PUCCH) channel estimation by using a demodulation reference signal (DMRS) per slot, but it is further allowed to perform PUSCH (or PUCCH) channel estimation by using DMRSs assigned to a plurality of slots, respectively. Such channel estimation may be referred to as joint channel estimation or may be referred to as another name, such as cross-slot channel estimation.

Terminal 20 may transmit DMRSs assigned to (across) a plurality of slots such that base station 10 can perform the joint channel estimation using the DMRSs.

Further, in the radio communication system, an enhanced (or extended) function may be added to a feedback function from terminal 20 to base station 10. For example, an enhanced (or extended) function of terminal feedback for HARQ-ACK and an enhanced function of CSI feedback for more accurate MCS selection may be added.

Next, configurations of base station 10 and terminal 20 will be described. Note that the configurations of base station 10 and terminal 20 described below illustrate an example of functions related to the present embodiment. Base station 10 and terminal 20 may have functions that are not illustrated. Further, functional classification and/or names of functional sections are/is not limited as long as the functions serve for executing operations according to the present embodiment.

### <Configuration of Base Station>

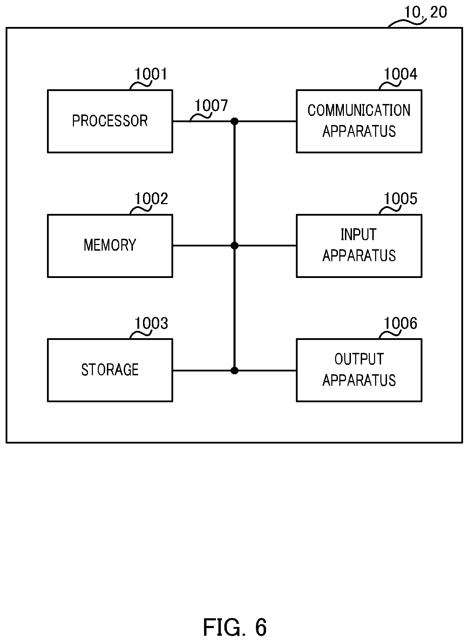

FIG. 6 is a block diagram illustrating an exemplary configuration of base station 10 according to the present embodiment. Base station 10 may include, for example, transmission section 101, reception section 102, and control section 103. Base station 10 communicates with terminal 20 by radio.

Transmission section 101 transmits a downlink (DL) signal to terminal 200. For example, transmission section 101 transmits the DL signal under the control of control section 103.

The DL signal may include, for example, a downlink data signal and control information (e.g., Downlink Control Information (DCI)). Further, the DL signal may include information indicating scheduling related to signal transmission of terminal 200 (e.g., UL grant). Moreover, the DL signal may include higher layer control information (e.g., Radio Resource Control (RRC) control information). Furthermore, the DL signal may include a reference signal.

Channels used for DL signal transmission include, for example, a data channel and a control channel For example, the data channel may include a Physical Downlink Shared Channel (PDSCH), and the control channel may include a Physical Downlink Control Channel (PDCCH). For example, base station 10 transmits control information to terminal 20 by using PDCCH and transmits a downlink data signal by using PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a downlink data signal and is transmitted by using PDSCH.

Reception section 102 receives an uplink (UL) signal transmitted from terminal 200. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates resources (or channels) used for DL signal transmission and reception and/or resources used for UL signal transmission and reception. Information on the allocated resource(s) may be included in control information to be transmitted to terminal 200.

Control section 103 may configure a plurality of PUCCH resource sets as an example of the allocation of the resources used for the UL signal transmission and reception. Information on the configured plurality of PUCCH resource sets may be indicated to terminal 200 by RRC.

Further, control section 103 may configure or control, for terminal 20, the enabling or disabling of the "PUCCH carrier switching" based on above-mentioned Proposal 1 or Proposal 2 relating to the "PUCCH carrier switching."

### <Configuration of Terminal>

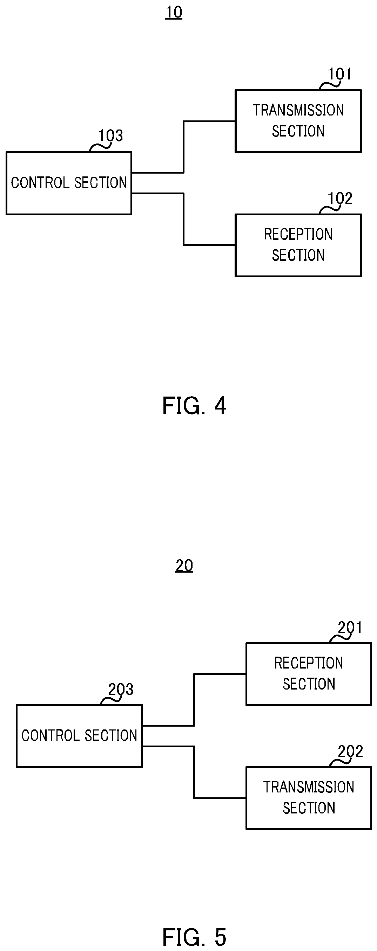

FIG. 5 is a block diagram illustrating an exemplary configuration of terminal 20 according to the present embodiment. Terminal 20 may include, for example, reception section 201, transmission section 202, and control section 203. Terminal 20 communicates wirelessly with, for example, base station 10.

Reception section 201 receives a DL signal transmitted from base station 10. For example, reception section 201 receives the DL signal under the control of control section 203.

Transmission section 202 transmits an UL signal to base station 10. For example, transmission section 202 transmits the UL signal under the control of control section 203.

The UL signal may include, for example, an uplink data signal and control information (e.g., UCI). For example, information on processing capability of terminal 20 (e.g., UE capability) may also be included. Further, the UL signal may include a reference signal.

Channels used for UL signal transmission include, for example, a data channel and a control channel. For example, the data channel may include PUSCH and the control channel may include PUCCH. For example, terminal 20 receives control information from base station 10 by using PUCCH and transmits a UL data signal by using PUSCH.

The UL signal may include at least one reference signal of a DMRS, a Phase-Tracking Reference Signal (PTRS), a CSI-RS, a Sounding Reference Signal (SRS), and a Positioning Reference Signal (PRS), for example. The reference signal such as the DMRS and PTRS is used for demodulation of the uplink data signal and is transmitted using the PUSCH, for example.

Control section 203 controls communication operations of terminal 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

Note that the channels used for DL transmission and the channels used for UL transmission are not limited to the examples mentioned above. For example, the channels used for the DL transmission and the channels used for the UL transmission may include a Random Access Channel (RACH) and a Physical Broadcast Channel (PBCH). RACH may be used for, for example, transmission of a DCI including a Random Access Radio Network Temporary Identifier (RA-RNTI).

### (Hardware Configuration)

Note that, the block diagrams used to describe the embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or by radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

For example, the base station, the terminal, and the like according to an embodiment of the present disclosure may function as a computer that executes processing of a wireless communication method of the present disclosure. FIG. 10 illustrates an exemplary hardware configuration of the base station and the terminal according to an embodiment of the present disclosure. Base station 100 and terminal 200 described above may be physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configuration of base station 100 and terminal 200 may include one apparatus or a plurality of apparatuses illustrated in the drawing, or may not include part of the apparatuses.

The functions of base station 100 and terminal 200 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103 and control section 203 as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, control section 103 of base station 100 or control section 203 of terminal 200 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that, the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the wireless communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be, for example, a database, a server or other appropriate media including at least one of memory 1002 and storage 1003.

Communication apparatus 1004 is hardware (transmission and reception device) for communication between computers through at least one of wired and wireless networks and is also called, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, and transmission section 202, and the like as described above may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that, input apparatus 1005 and output apparatus 1006 may be integrated (for example, a touch panel).

The apparatuses, such as processor 1001, memory 1002 and the like, are connected by bus 1007 for communication of information. Bus 1007 may be configured using one bus or using buses different between each pair of the apparatuses.

Furthermore, base station 100 and terminal 200 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification and Signaling of Information)

The notification of information is not limited to the aspect/embodiment described in the present disclosure, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB), and System Information Block (SIB))), and other signals or a combination thereof. The RRC signaling may be called an RRC message and may be, for example, an RRC connection setup message, an RRC connection reconfiguration message, or the like.

### (Applied System)

The aspect/embodiment described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and/or the like)

The orders of the processing procedures, the sequences, the flowcharts, and the like of the aspect/embodiment described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information or the like (*see the item of "Information and Signals") can be output from a higher layer (or lower layer) to a lower layer (or higher layer). The information and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., coaxial cable, optical fiber cable, twisted pair, and digital subscriber line (DSL)) and a radio technique (e.g., infrared ray and microwave), the at least one of the wired technique and the radio technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or a random combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulae and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### (Base Station (Radio Base Station))

The terms "Base Station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a means of transport (e.g., automobile, airplane, or the like), an unmanned mobile entity (e.g., drone, autonomous driving vehicle, or the like), or a robot (manned or unmanned). Note that, at least one of the base station and the mobile station also includes an apparatus that does not necessarily move during communication operation. For example, at least one of the base station and the mobile station may be Internet-of Things (IoT) equipment such as a sensor.

The base station in the present disclosure may also be replaced with the user terminal. For example, the aspect/embodiment of the present disclosure may find application in a configuration that results from replacing communication between the base station and the user terminal with communication between multiple user terminals (such communication may, for example, be referred to as device-to-device (D2D), vehicle-to-everything (V2X), or the like). In this case, terminal 200 may be configured to have the functions that base station 100 described above has. The wordings "uplink" and "downlink" may be replaced with a corresponding wording for inter-terminal communication (for example, "side"). For example, an uplink channel, a downlink channel, and the like may be replaced with a side channel.

Similarly, the terminal in the present disclosure may be replaced with the base station. In this case, base station 100 is configured to have the functions that terminal 200 described above has.

### (Meaning and Interpretation of Terms)

As used herein, the term "determining" may encompass a wide variety of actions. For example, "determining" may be regarded as judging, calculating, computing, processing, deriving, investigating, looking up (search or inquiry) (e.g., looking up in table, database or another data structure), ascertaining and the like. Furthermore, "determining" may be regarded as receiving (for example, receiving information), transmitting (for example, transmitting information), inputting, outputting, accessing (for example, accessing data in memory) and the like. Further, "determining" may be regarded as resolving, selecting, choosing, establishing, comparing and the like. That is, "determining" may be regarded as a certain type of action related to determining. Further, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### (Reference Signal)

The reference signal can also be abbreviated as an RS and may also be called as a pilot depending on the applied standard.

### (Meaning of "based on")

The description "based on" used in the present disclosure does not mean "based only on," unless otherwise specified. In other words, the description "based on" means both of "based only on" and "based at least on."

### (Terms "first" and "second")

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### ("Means")

The "section" in the configuration of each apparatus described above may be replaced with "means," "circuit," "device," or the like.

### (Open-ended Format)

In a case where terms "include," "including," and their modifications are used in the present disclosure, these terms are intended to be inclusive like the term "comprising." Further, the term "or" used in the present disclosure is not intended to be an exclusive or.

### (Time Units such as a TTI, Frequency Units such as an RB, and a Radio Frame Configuration)

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than that of the slot. PDSCH (or PUSCH) that is transmitted in the time unit that is greater than the mini-slot may be referred to as PDSCH (or PUSCH) mapping type A. PDSCH (or PUSCH) that is transmitted using the mini-slot may be referred to as PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (frequency bandwidth, transmit power, and the like that are used in each user terminal) on a TTI-by-TTI basis to each user terminal. Note that the definition of TTI is not limited to this.

The TTI may be a time unit for transmitting a channel-coded data packet (transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that makes up the minimum time unit for the scheduling may be controlled.

A TTI that has a time length of 1 ms may be referred to as a usual TTI (TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini-slot, a subslot, a slot, or the like.

Note that the long TTI (for example, usual TTI, subframe, or the like) may be replaced with the TTI that has a time length which exceeds 1 ms, and the short TTI (for example, shortened TTI or the like) may be replaced with a TTI that has a TTI length which is less than a TTI length of the long TTI and is equal to or longer than 1 ms.

A resource block (RB) is a resource-allocation unit in the time domain and the frequency domain, and may include one or more contiguous subcarriers in the frequency domain. The number of subcarriers that is included in the RB may be identical regardless of the numerology, and may be 12, for example. The number of subcarriers that is included in the RB may be determined based on the numerology.

In addition, the RB may include one symbol or a plurality of symbols in the time domain, and may have a length of one slot, one mini slot, one subframe, or one TTI. One TTI, one subframe, and the like may be each constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as partial bandwidth or the like) may represent a subset of contiguous common resource blocks (RB) for certain numerology in a certain carrier. Here, the common RBs may be identified by RB indices with reference to a common reference point of the carrier. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that is included in the radio frame, the number of slots per subframe or radio frame, the number of mini-slots that is included within the slot, the numbers of symbols and RBs that are included in the slot or the mini-slot, the number of subcarriers that is included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### (Variations and the like of Aspects)

The aspect/embodiment described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiment described in the present disclosure. Modifications and variations of the aspect of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

An aspect of the present disclosure is useful for radio communication systems.

### Reference Signs List

10 Base station
20 Terminal
101, 202 Transmission section
102, 201 Reception section
103, 203 Control section

## Claims

1. A terminal, comprising:
a control section that determines granularity of an object for which switching control of a carrier on which an uplink control channel is transmitted is to be supported; and
a transmission section that performs, on the object in accordance with the determined granularity, transmission of the uplink control channel under the switching control of the carrier.

2. The terminal according to claim 1, wherein the control section supports the switching control of the carrier for, as the object, one of a priority of uplink control information or the uplink control channel and a type of the uplink control information.

3. The terminal according to claim 1, wherein the control section supports the switching control of the carrier individually for, as the object, a priority of uplink control information or the uplink control channel and a type of the uplink control information.

4. The terminal according to claim 1, wherein the control section supports the switching control of the carrier collectively for, as the object, a priority of uplink control information or the uplink control channel and a type of the uplink control information.

5. The terminal according to claim 1, wherein enabling and disabling of either or both of dynamic switching control of the carrier or/and semi-static switching control of the carrier is implicitly or explicitly indicated from a base station.

6. A radio communication method, comprising:
determining, by a terminal, granularity of an object for which switching control of a carrier on which an uplink control channel is transmitted is to be supported; and
performing, by the terminal, on the object in accordance with the determined granularity, transmission of the uplink control channel under the switching control of the carrier.
